## Europäisches Patentamt

## European Patent Office

## Office européen des brevets

(19)

(11) Veröffentlichungsnummer: **0 103 728 B1**

(12) **EUROPÄISCHE PATENTSCHRIFT**

(45) Veröffentlichungstag der Patentschrift:
28.01.87

(21) Anmeldenummer: **83107792.0**

(22) Anmeldetag: **08.08.83**

(51) Int. Cl.⁴: **E 02 B 17/00**, E 02 B 15/04, B 63 B 27/00

(54) Verfahren zur Betreibung von offshore Erdölfeldern und zur Verladung bzw. Umschlag von Erdöl im Flachwasser-und Wattenbereich und hierzu geeignete künstliche Inseln.

(30) Priorität: **20.08.82 DE 3230927**

(43) Veröffentlichungstag der Anmeldung:
**28.03.84 Patentblatt 84/13**

(45) Bekanntmachung des Hinweises auf die Patenterteilung:
**28.01.87 Patentblatt 87/5**

(84) Benannte Vertragsstaaten:
**DE FR GB IT NL SE**

(56) Entgegenhaltungen:
**NL - A - 7 410 801
US - A - 3 463 114
US - A - 3 766 739
US - A - 3 958 521
US - A - 4 227 846
US - A - 4 283 159**

**TRAVAUX, Band 536, veröffentlich October 1979, Seite 121, Paris, FR
"Seewasserstraßen und Seehäfen" von Prof. Heinrich Press, Berlin-München 1962, Verlag von Wilhelm Ernst & Sohn, Seiten 702-718**

(73) Patentinhaber: **DEUTSCHE TEXACO AKTIENGESELLSCHAFT, Überseering 40, D-2000 Hamburg 60 (DE)**

(72) Erfinder: **Bartsch, Erich Otto, Hoher Kamp 11, D-2110 Buchholz/Nordheide (DE)**
Erfinder: **Vollstedt, Gerald, Kroonhorst 96, D-2000 Hamburg 53 (DE)**

(74) Vertreter: **Schupfner, Gerhard D., Müller, Schupfner & Gauger Karlstrasse 5 Postfach 14 27, D-2110 Buchholz/Nordheide (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung bezieht sich auf ein Verfahren zur Betreibung von Offshore-Erdölfeldern und zur Verladung bzw. Umschlag von Erdöl im Flachwasser- und Wattenbereich. Die Erfindung bezieht sich weiterhin auf künstliche Inseln zur Betreibung von Offshore-Erdölfeldern und zur Verladung bzw. Umschlag von Erdöl ohne Schädigung der Umwelt. Diese künstlichen Inseln sind in Watt- und Flachwasserbereichen bis etwa 30 m Wassertiefe als Einzelanlage oder als Verbundanlage kombiniert mit Betriebsanlagen für die Entwicklung und das Betreiben von Offshore-Erdölfeldern in Flachwasserbereichen geeignet.

Die Offshore-Erdöltechnik befasst sich mit der Exploration, d.h. der Geologie und Geophysik der Lagerstätte, dem Erdölaufschluss, der Erdölgewinnung und dem Rohöltransport zur Verarbeitung. Die Ausgangssituation für Aufschluss- und Gewinnungstätigkeiten im Offshore-Bereich ist die Schaffung geeigneter Standflächen für Bohr-, Betriebs- und Förderanlagen sowie für die Rohölverladung.

Für Offshore-Projekte in mittleren und grösseren Wassertiefen, etwa ab 20 bis 30 m, mit häufig küstenfernen Standorten lösen Hubinseln, Halbtaucher, Stahl- oder Betonplattformen die Standflächenfrage und offene Schiffsverladung an Mooring-Systemen oder Rohölfernleitungen die Rohöltransportfrage.

In Flachwasser- und Wattbereichen wird in der Regel die gleiche Offshore-Technologie eingesetzt wie für mittlere Wassertiefen, wobei hier als Flachwasser- und Wattbereiche Seegebiete mit Wassertiefen unter etwa 10 m definiert sind, mit einer Übergangszone zwischen etwa 10 m und 30 m. Erdölaufschluss und Erdölgewinnng in diesen Flachwassergebieten weisen besondere Schwierigkeiten auf. Die Küstennähe bedingt erhöhte ökologische Anforderungen an umweltsichere Bau- und Betriebsabläufe für das Bohren, Fördern, den Rohölumschlag und den Rohöltransport. Aus Gründen des unzureichenden Tiefganges und wegen morphologischer Restriktionen fehlt ein Zugang zu den angestrebten Standorten, oder der Zugang ist erheblich erschwert für konventionelle Offshore-Anlagen und anderes schweres Gerät. Für die Verlegung von Seeleitungen zum Rohöltransport in Wattgebieten sind die Bedingungen erheblich erschwert infolge von Tiefgangsproblemen und erhöhten Risiken bei Leitungsschäden. Durch Verlege- und Reparaturarbeiten an den Leitungen erfolgen besonders in Wattgebieten Störungen morphologischer Abläufe. Die hierdurch bedingte Umweltgefährdung verbietet für ökologisch besonders sensible Küstenbereiche die offene Seeverladung über Mooring-Systeme. Für Erdölfunde höherviskoser Rohöle, deren Fernleitungstransport aus wirtschaftlichen und/oder technischen Gründen nicht gesichert werden kann, unterbindet der gleichzeitige Ausschluss der Seeverladung des geförderten Rohöls die Felderschliessung überhaupt.

Der Ölumschlag vom Tanker an Land und mit Sperren versehene und mit denselben verschliessbare Hafenbecken für die Verladung und/oder den Umschlag von Erdöl sind bekannt aus «Seewasserstrassen und Seehäfen», Heinrich Press, Berlin-München 1962, Verlag Wilhelm Ernst & Sohn, Seiten 702 bis 718.

Bisher hat sich eine definierte Offshore-Technologie, die den amphibischen Verhältnissen insbesondere der Wattgebiete Rechnung trägt, noch nicht herausgebildet, die vergleichbar mit der inzwischen klassischen Offshore-Technologie für mittlere und grössere Wassertiefen wäre. Dies gilt insbesondere für die Rohölverladung und den Rohölumschlag.

Es bestand somit die Aufgabe, ein Verfahren und Anlagen zu entwickeln, die es gestatten, Erdöl sicher und ohne eine Gefährdung der Umwelt umzuschlagen und zu transportieren und Betriebsanlagen zu betreiben, die der Förderung, Aufbereitung, Lagerung des Erdöls dienen.

In Lösung der gestellten Aufgabe besteht das erfindungsgemässe Verfahren zur Betreibung von Offshore-Erdölfeldern und zur Verladung bzw. Umschlag von Erdöl im Flachwasser- und Wattenbereich darin, dass Aufschluss, Förderung, Aufbereitung und Verladung bzw. Umschlag auf stationären künstlichen Inseln mit durch Sperren verschliessbaren Hafenbecken erfolgen.

Zur Durchführung dieses Verfahrens werden künstliche Inseln bereitgestellt, die dadurch gekennzeichnet sind, dass sie ein oder mehrere mit Sperren, insbesondere Schleusen verschliessbare Hafenbecken für die Verladung bzw. den Umschlag des Erdöls aufweisen, die mit Reinigungsanlagen zur Beseitung von durch Verladung bzw. Umschlag verursachten Verunreinigungen im Hafenbecken, insbesondere mit Gegenstromanlagen, ausgerüstet sind.

Durch den Bau stationärer künstlicher Inseln, die als Sammellokationen für abgelenkte Bohrungen zur Erschliessung der Rohöllagerstätten dienen, werden die Standflächen für einzelne oder sämtliche zum Bohren, Fördern, Aufbereiten, Stapeln und Verladen des Rohöls erforderlichen Betriebsanlagen und deren Umweltsicherungseinrichtungen geschaffen. In die künstlichen Inseln werden durch Schleusen mit Hub-, Schiebe- oder Klapptoren oder sonstige betriebssicheren Einrichtungen (z.B. Luftsperren) verschliessbare und vorzugsweise mit Gegenstromanlage ausgerüstete Hafenbecken integriert, in denen die Rohölverladung in Tankbargen oder Tankschiffe umweltsicher dergestalt erfolgt, dass während des Verladevorganges die Hafenbecken verschlossen sind. Das Hafenbecken dient als Auffangbecken für auslaufendes Rohöl. Die Gegenstromanlage bewirkt eine von See abgekehrte Oberflächenströmung im Hafenbecken zu einem Ölsammelbecken hin, aus dem ausgetretenes Rohöl zur Weiterleitung an eine Rohölaufbereitungsanlage abgepumpt und das Wasser gereinigt wird.

Ölwehrvorrichtungen, wie z.B. Dampfstrahlanlagen, werden zur Reinigung der Hafenbeckenwandungen und verölter Schiffskörper eingesetzt und sorgen für die völlige Beseitigung des Ölschadens vor Freigabe der Schiffseinheiten zum Auslaufen aus dem Hafenbecken.

Das erfindungsgemässe Verfahren und die erfindungsgemässen Vorrichtungen gewährleisten erst den Rohölumschlag im Flachwasser- und Wattenbereich ohne Schädigung der Umwelt durch aktiv gesicherten und visuell kontrollierten Rohölverladebetrieb. Damit werden erst die technischen und wirtschaftlichen Voraussetzungen für die Entwicklung und das Betreiben von Offshore-Erdölfeldern in Watt- und Flachwasserbereichen und die Voraussetzungen für die Erteilung der behördlichen Betriebserlaubnis geschaffen.

Das Konzept des künstlichen Inselbaues in Flachwasser- und Wattbereichen durch wirtschaftlich erstellbare grossräumige Standflächen für Betriebsanlagen bietet die Voraussetzung für eine weitgehende Feldentwicklung und Feldbetrieb unter Anwendung der kostengünstigeren Onshore-Erdöltechnologien. Erfindungsgemäss werden weiterhin die Voraussetzungen geschaffen, die Investitionskosten für die Infrastruktur eines offshore-Erdölfeldes durch Konzentration der Betriebsanlagen und Vermeidung des Fernleitungsbaues erheblich zu senken.

Die vorliegende Erfindung wird nunmehr anhand der folgenden Zeichnungen beispielsweise erläutert:

Fig. 1 Grundriss 1/1 einer Verbundanlage mit verschliessbaren Hafenbecken für Wassertiefen bis etwa 30 m mit Querschnitt 1/2 der Schnittlinie A von 1/1.

Fig. 2 Aufsicht auf ein einschwimmbares Hafenbecken.

Fig. 3 Grundriss 3/1 einer Verbundanlage mit verschliessbaren Hafenbecken für Wassertiefen bis etwa 30 m mit Querschnitt 3/2 und Caisson-Anordnung 3/3.

Fig. 4 Schema eines Gegenstromsystems des Hafenbeckens.

Fig. 5 Grundriss eines Einzel-Seehafens mit verschliessbarem Hafenbecken.

Die Ausbildung der künstlichen Inseln, die die verschliessbaren Hafenbecken aufnehmen, kann in viereckiger, mehreckiger, runder oder ovaler Grundrissform erfolgen. Als Vertikalformen einer solchen Insel kommen kegel-, stumpf- oder quaderförmige Formen oder deren Mischformen in Frage.

Die Inselumwallungen können als befestigte Böschungen, Spundwandsysteme, Caissons oder in deren Mischformen ausgeführt sein.

Die Aufschüttung und Auffüllung des Inselinnenraumes mit Sand erfolgt unter Anwendung hydraulischer Spülverfahren und/oder mechanischer Schüttverfahren sowie von Bodenverdichtungsverfahren nach an sich bekannten technischen Regeln unter Beachtung der Verordnungen für Küstenbauwerke (Deiche, Hafenanlagen, Leuchtfeuer). Hierbei sind ozeanographische Kriterien wie Wind-, Wellen-, Eiskräfte, Wellenhöhe, Grundströmungen und Eisschichtung, bodenmechanische Kriterien wie Untergrundfazies, Bodenfestigkeit, Topographie und Morphologie, bauwerkstatische Kriterien, hydrologische Kriterien, wasser- und schiffahrtsrechtliche Regelungen und Sonderbestimmungen, etwa für ökologische und militärische Schutzzonen, zu beachten.

Die Anzahl und Grösse der Hafenbecken ist nach den Kriterien der Grösse und des Tiefgangs der einsetzbaren Barken oder Tankschiffe, der Zeitdauer der Rundreise eines Transports, der Höhe der Rohölproduktion bei der Rohölförderung und den Erfordernissen einer Auswahlmöglichkeit bei einem Verladeunfall festzulegen.

Die Anordnung der Hafenbecken innerhalb der künstlichen Inseln hat nach topographischen Verhältnissen für die Hafenzufahrt, vorherrschenden Windrichtungen und Windstärken und der räumlichen Zuordnung der betrieblichen Sicherheitsbereiche zu erfolgen.

Die Erstellung der Hafenbecken kann durch Einschwimmen und Absetzen vorgefertigter Beton- oder Stahl-Caissons in/auf die teilerstellte künstliche Insel oder durch Treiben von Spundwänden als Begrenzungen der Hafenbecken und Absenkung des Hafenbodens durch Ausspülen bzw. Auskoffern und dessen Kolkschutzsicherung je nach Erfordernis erfolgen.

Als Bestandteil der Gesamtbetriebsanlagen eines offshore-Erdölfeldes können die umweltsicheren Hafenanlagen zur Rohölverladung gemäss der vorliegenden Erfindung als Einzelanlagen vorgesehen sein, d.h. durch offene See räumlich bis auf Feldleitungsverbindungen von den weiteren offshore-Ölfeldanlagen getrennte, eigene in künstlichen Inseln eingebettete Betriebspunkte vorgesehen werden oder als Verbundanlage mit weiteren Betriebsanlagen eines offshore-Erdölfeldes für Bohren, Fördern, Aufbereiten und/oder Lagern.

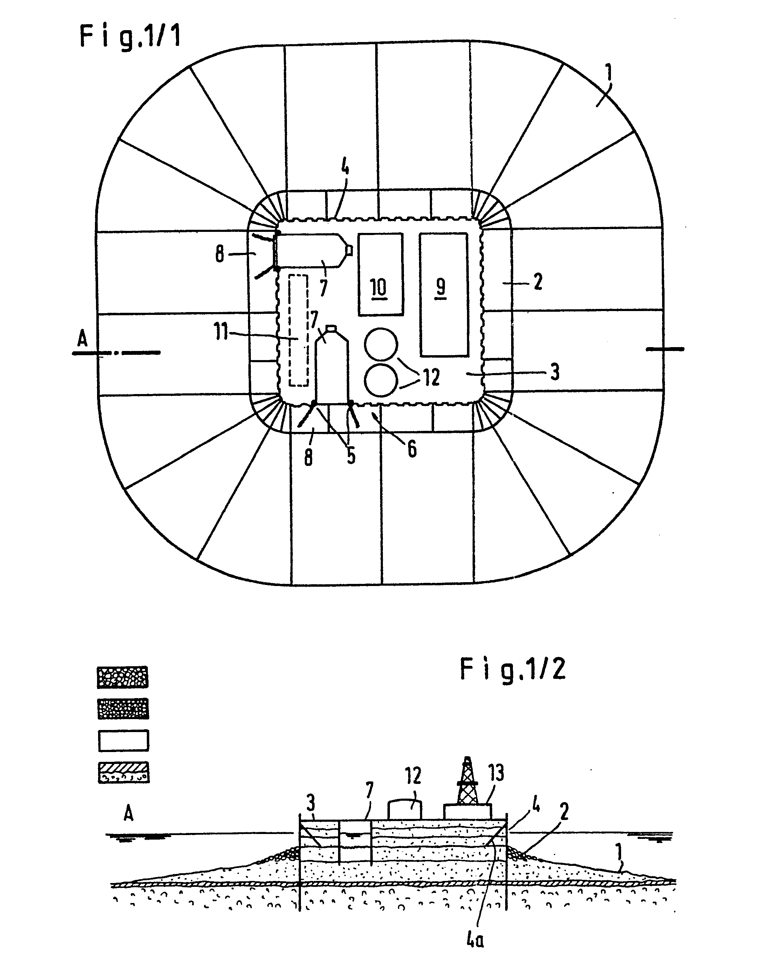

Fig. 1/1 stellt in schematischer Darstellung den Grundriss einer Verbundanlage mit verschliessbarem Hafenbecken dar. Es handelt sich hier in beispielsweiser Ausführung um eine künstliche Insel in kombinierter Damm-/Spundwandbauweise, wobei das Hafenbecken in Spundwandausführung vorgesehen ist.

Zur Errichtung einer solchen Verbundanlage wird zunächst der Meeresgrund durch Auskoffern nichttragender Bodenschichten je nach Erfordernis stabilisiert. Werden die Spundwände durch geringmächtige, nichttragende Schichten hindurch in gewachsenen Boden getrieben, so ist eine Bodenvorbereitung durch Abtrag nicht immer erforderlich.

Sodann wird Seesand aus der Umgebung durch Schüttung mit einem flachen Böschungswinkel bis zum oberen Grenzbereich der Ruhigwasserzone zu einer ebenen Inselbasis 1 aufgebaut, ggf. durch Vibrationstechniken verfestigt und mit grobem Seekies entsprechend den Anforderungen für Kolkschutz abgedeckt.

Im Anschluss hieran werden entlang der Projektion der Peripherie der vorgesehenen Fläche des Inseldecks 3 um den Kernbereich der Inselbasis 1 Spundwände 4 gerammt, deren Länge von der Bauhöhe der künstlichen Insel über dem Meeresspiegel und der erforderlichen Einspannung im Untergrund bestimmt wird.

Die Hafeneinfahrten 8 werden seitlich durch gerammte Schleusentorpfeiler 5 begrenzt, die der späteren Lastaufnahme und Lastableitung der Schleusentore 6 dienen. Die Frontseiten der Hafeneinfahrten 8 werden zur Fülllung der künstlichen Insel mit Seesand temporär durch Pfähle und Einbringung von Verschaltungsplatten, entsprechend dem Baufortschritt, verschlossen.

Innerhalb der Spundwände 4 wird der Kern der künstlichen Insel bis zum vorgesehenen Niveau des Decks 3 mit Seesand aufgeschüttet bzw. hydraulisch aufgespült und verfestigt und die Spundwände 4 nach Erfordernis verankert, 4a.

Gegen Auskolkungen der Oberfläche der Inselbasis 1 im Bereich der Spindwände 4 wird diese durch eine Kolkschutzböschung, die die Inselböschung 2 bildet, aus geeignetem Material gesichert.

Als Begrenzung der Hafenbecken 7 werden Spundwände 4 in erforderlicher Dimensionierung eingerammt. Der innerhalb dieser Spundwände 4 eingeschlossene Füllsand wird nach Entfernen der temporären Schutzwände im Bereich der Hafeneinfahrten 8 durch Auskoffern oder Ausspühlen bis auf die vorgesehene Tiefe der Hafenbeckensohle entfernt und letztere mit Kolkschutzbelag versehen.

Die Schleusentore 6, Gegenstromanlagen, Ölwehr- und Verladeeinrichtungen (nicht gezeigt) werden als Hafenbetriebsanlagen montiert und die Betriebsbereitschaft der Seehafenanlage damit hergestellt.

Auf die erstellten Freiflächen des Decks 3 der künstlichen Insel erfolgt die Montage der zum Bohren, Fördern, Betreiben notwendigen erdöltechnischen Anlagen, wie der Bereich Bohren, Fördern 9, der Bereich Aufbereitung 10 und der Bereich Wirtschaftsgebäude 11 sowie des in diesem Beispiel obertägig zu erstellenden Rohölstapelraums wie Tanks 12 in konventioneller Onshore-Technologie. Es ist eine an sich bekannte Landbohranlage 12 vorgesehen.

Als weitere Verbund-Seehafenanlage für Wassertiefen bis etwa 30 m ist im folgenden beispielsweise eine künstliche Insel in Dammbauweise mit Hafenbecken als Caisson dargestellt (nicht durch Zeichnung erläutert). Auch hier wird der Meeresgrund zunächst durch Auskoffern nichttragender Bodenschichten je nach Erfordernis stabilisiert und sodann Seesand aus der Umgebung hydraulisch und/oder mechanisch mit flachem Böschungswinkel bis zum oberen Grenzbereich der Ruhigwasserzone einer Inselbasis aufgebaut, ggf. durch Vibrationsverfahren verfestigt und mit grobem Seekies entsprechend der Anforderung für Kolkschutz abgedeckt. Auf der ebenen Fläche dieser Inselbasis wird ein Ringwall aus grobem Steinmaterial geschüttet, seine Innenfläche mit Seesand zu einer Ebene aufgefüllt und verfestigt. Dieser Bauvorgang wird unter Versetzung der Ringwälle zum Inselinneren in Stufen fortgesetzt, bis das Absetzniveau der Hafenbecken erreicht ist. Die Aussenseiten der Ringwälle ergeben eine auf die Entwurfskriterien ausgelegte steilere Böschung 2, die als Kolkschutz zur Seeseite mit Steinblöcken oder anderen Kolkschutzmaterialien belegt wird.

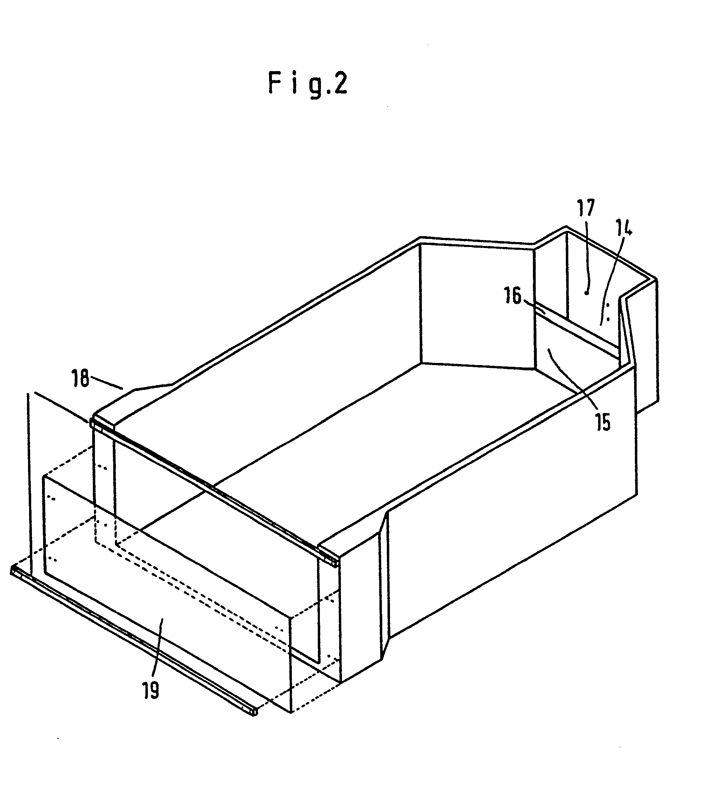

Die Hafenbecken sind Bauelemente der künstlichen Insel und werden im Dock als nach oben und nach einer Stirnseite offene Quader gemäss Fig. 2 ausgeführt. Die zweite Stirnseite des Hafenbeckens ist zur Wasserentnahme aus dem Hafenbecken mit einem Lecköhlsammelbecken 14 ausgerüstet, dessen Trennwand 15 zur Niveauregulierung 16 dient. Die hintere Wand des Lecköhlsammelbeckens 14 ist mit Saugrohrdurchlässen 17 zur Aufnahme von Saugstutzen für die Wasserentnahme aus dem Hafenbecken versehen.

Zum Seetransport der Hafenbecken mit Schleppern wird die offene Stirnseite, an der sich Vorrichtungen zur Aufnahme der Schleusentore wie Schleusentorführungsschienen 18 befinden, mit einer Stahlplatte 19 abdichtend verschlossen. Nach Erreichen der Lokation werden die Hafenbecken durch Fluten des Innenraumes, orientiert auf der teilerstellten Insel, im vorgesehenen Niveau abgesetzt. Durch weitere Füllung des Hafenbeckens mit Seesand können Überlasten, kontrolliert nach Erfordernis, dargestellt werden. Durch Fortsetzung der Inselaufschüttung nach dem oben ausgeführten Ringwallverfahren werden die Hafenbecken 7 in den Füllsand eingebettet, bis die Inselebene das vorgesehene Absetzniveau der Rohölstapeltanks erreicht hat.

Die Rohöltanks 12 sind gleichfalls Bauelemente der künstlichen Insel und können als geschlossene Betonzylinder im Dock ausgeführt, mit Schleppern zur Lokation verholt und durch Fluten des Innenraumes, orientiert auf der teilerstellten Insel, im vorgesehenen Niveau abgesetzt werden. Durch Befüllen mit Seewasser wird der bodenmechanische Setzvorgang durch Überlast beschleunigt.

Die Inselaufschüttung wird anschliessend im oben ausgeführten Verfahren fortgesetzt (und die Rohöltanks 12 hierbei in Füllsand eingebettet), bis das vorgegebene Inselniveau über Normalniveau in der vorgegebenen Standflächengrösse erreicht ist. Eine ölfeste Abdeckung der künstlichen Inselfläche beendet den Bau der künstlichen Insel. Für den folgenden Bohr- und Förderbetrieb sind damit die Voraussetzungen geschaffen, die Arbeiten unter onshore-Bedingungen und mit konventionellen onshore-Geräten auszuführen.

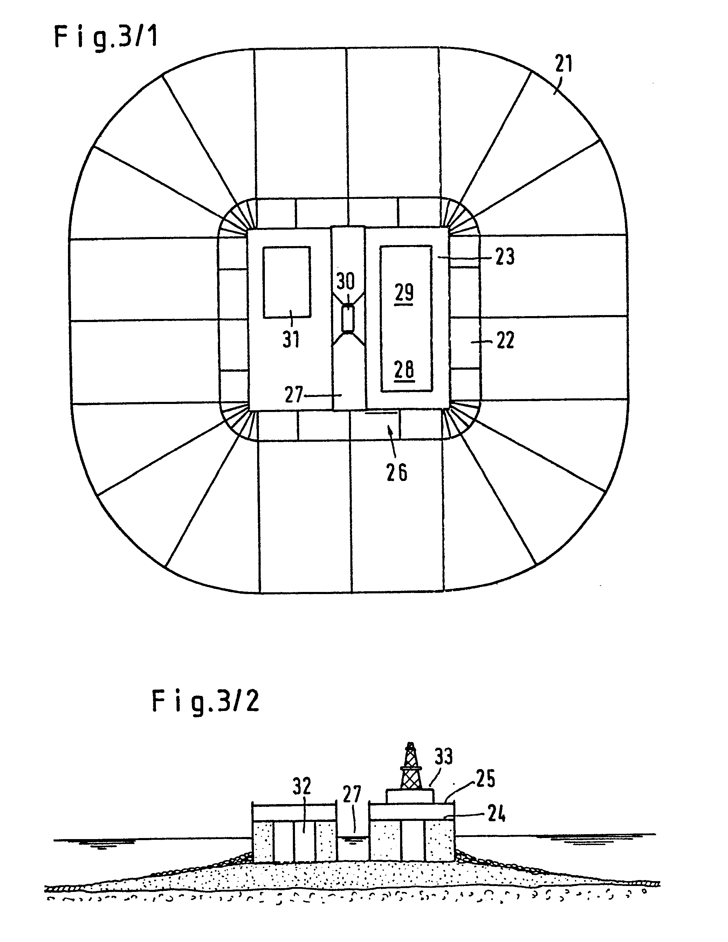

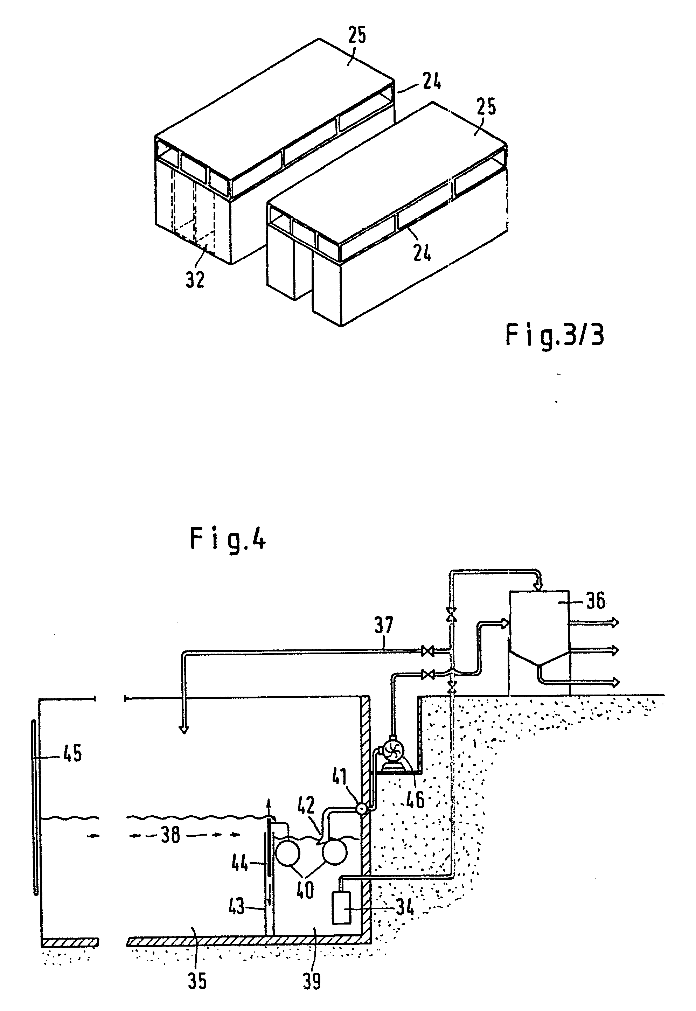

Als letztes Beispiel für eine Verbund-Seehafenanlage für Wassertiefen bis etwa 30 m ist im folgenden eine künstliche Insel in kombinierter Insel-/Caisson-Ausführung erläutert, wobei das Hafenbecken durch die Ciasson-Begrenzung gebildet ist. Diese Ausführungsform ist in Fig. 3 wiedergegeben.

Wiederum wird der Seegrund durch Auskoffern der nichttragenden Bodenschichten nach Erfordernis stabilisiert und Seesand aus der Umgebung durch Schüttung mit flachem Böschungswinkel bis zum oberen Bereich der Ruhigwasserzone bzw. orientiert am Tiefgang der einzuschwimmenden Caissons zu einer ebenen Inselbasis 21 aufgebaut, durch Vibrationsverfahren verfestigt und mit grobem Seekies entsprechend den Anforderungen für Kolkschutz abgedeckt. Die Ebene der Inselbasis 21, d.h. die Stellfläche für die Caissons, wird horizontal nivelliert. Die Caissonbauteile der Verbund-Hafenanlage (zwei- oder mehrteilig) werden in Beton oder Stahl in Docks oder auf Pontons als Schwimmkörper vorgefertigt. Sie enthalten, aus Gründen der Raumersparnis, bevorzugt in Doppel- oder Mehrfach-Deckausführung, wie Unterdeck 24 und Oberdeck 25, Stellflächen für sämtliche zum Bohren und Fördern 29, Aufbereiten und Verladen 28, Wirtschaftsgebäude 31 und Rohöltanks 32 und andere zum Betreiben eines Erdölfeldes erforderlichen Gerätschaften, die nach technischen und wirtschaftlichen Erfordernissen teilweise oder überwiegend vor dem Ausschwimmen der Ciassons installiert werden. So können die Gerätschaften zum Bohren und Fördern einerseits und die Gerätschaften zum Aufbereiten und Verladen andererseits auf verschiedenen Decks untergebracht sein.

Die fertigerstellten Caissonbauelemente werden von Schleppern zur Insellokation verholt, durch Fluten der Caisson-Kammern dergestalt orientiert abgesetzt, dass je eine Seitenwand eines Caissons oder einer Caissonreihe, die Seitenbegrenzungen des Hafenbeckens 27 bilden, wobei die Hafenbeckenbreite durch den vorgegebenen Parallelabstand der Caissonreihen voneinander bestimmt wird. Durch Einbringen von Sandballast werden die Standfestigkeiten gemäss der konstruktiven Ausführung und der Einsatzbedingungen nach Erfordernis hergestellt. Die Caissons erhalten im Bereich der Fundamente gesonderten Kolkschutz.

Das Ölauffangbecken 30 mit Gegenstromanlage wird in der Mitte des durch beide Caissonreihen gebildeten Beckens als Bauelement abdichtend mit zweiseitig wirkendem Niveauregler gegen die Caissonwände eingebaut und hierdurch zwei Hafenbecken für Tankbargen geschaffen. Mit Installation der Schleusentore und Anschluss der Gegenstromanlage ist die Verbund-Hafenanlage betriebsbereit.

Im folgenden wird eine Verbund-Seehafenanlage für Wassertiefen von weniger als 10 m beispielsweise beschrieben. Eine solche Hafenanlage ist für Wattgebiete geeignet. Es wird eine künstliche Insel mit Hafenbecken in Spundwandbauweise hergestellt.

Von einer Bauhubinsel oder einer Rammbarge geringen Tiefgangs, die sich mit Flachboden auf dem Wattboden ggfs. absetzen kann, wird die Aussenspundwand der künstlichen Insel gerammt, verankert und durch Kolkschutz gesichert. Die Aussenspundwandtiefe wird auf die tiefste zu erwartende Auskolkung ausgelegt, die für die Lebensdauer der Insel zu erwarten ist. Die Höhe über dem Meeresspiegel beträgt mittleres Tidehochwasser, plus ausreichende Überhöhe gegen Überspülung.

Durch Auffüllen des von den Spundwänden gebildeten Innenraums mit Seesand aus der näheren Umgebung und dessen Verfestigung wird eine Plattform geschaffen, von der in konventioneller Landbauweise die künstliche Insel weitergebaut wird. Es wird die Innenspundwand gerammt, deren Abmessungen sich aus der erforderlichen Überhöhung gegenüber der See und aus baustatischen Überlegungen ableitet. Zwischen der äusseren und inneren Spundwandbegrenzung der künstlichen Insel wird eine Böschung aus Kolkschutzmaterial aufgeschüttet, der Innenraum der inneren Spundwand mit Füllsand aufgefüllt und verfestigt. Sodann werden die Spundwandbegrenzungen der Hafenbecken und der Hafenausfahrten sowie die Tragpfeiler der Schleusentore gerammt. Im Bereich der Einfahrt des Hafenbecken werden die äussere und innere Spundwand bis auf Meeresbodenniveau abgeschnitten. Der Füllsand innerhalb der Hafenbecken wird ausgekoffert, der Boden der Hafenbecken betoniert, das Inseldeck mit ölfestem Belag versehen und die Betriebsanlagen afgebaut. Mit Einbau der Schleusentore, der Gegenstromanlage gemäss Fig. 4 und deren Anschluss ist die Seehafenverladungsanlage betriebsbereit und die künstliche Insel zur Einleitung der Feldentwicklung vorgerichtet.

Fig. 4 beschreibt eine mögliche Ausführungsform eines Gegenstrom-Systems des Hafenbeckens gemäss der Erfindung. Das Gegenstromsystem besteht aus einem Pumpsystem 34, das das Wasser des Hafenbeckens 35 direkt oder über eine Rohölabscheidungsanlage 36, etwa einem an sich bekannten Zyklon, mit Wasserrücklauf 37 im Kreislauf führt und hierbei durch Niveauregelung eine von der offenen See abgewandte Oberflächenströmung 38 von mehreren cm/sec zum Ölsammelbecken 39 des Hafenbeckens 35 erzeugt, von dessen Oberfläche Rohöl im Schadensfalle über mit Schwimmer 40 aufschwimmenden, mit Gelenk 41 vesehenen Saugstutzen 42 (Skimmer) abgesaugt wird. Das Ölsammelbecken 39 ist vom Hafenbecken 35 durch eine Trennwand 43 getrennt, die einen Niveauregler 44 aufweisen kann.

Die Rohölverladung in Tankbargen oder Tankschiffe erfolgt innerhalb des Hafenbeckens bei geschlossenem Schleusentor 45. Im Schadensfall wirken die geschlossenen Hafenbecken als Auffangbecken für auslaufendes Rohöl. Die Gegenstromanlage führt das Wasser des Hafenbeckens 35 direkt oder über die Rohölabscheidungsanlage 36 im Kreislauf und erzeugt hierbei die von der offenen See abgewandte Oberflächenströmung 38 bei Wasserentnahme aus dem Ölfangbecken 39 des Hafenbeckens 35, wobei das Lecköl über Skimmer 42 von der Oberfläche durch eine gesonderte Pumpanlage 46, etwa eine Kreiselpumpe abgesaugt wird.

Zur Reinigung von Hafenbecken- und Schiffswandungen von anhaftendem Rohöl nach einem Schadensfall werden z.B. Dampfstrahlanlagen und/oder mechanisch wirkende Reinigungsanlagen (nicht gezeigt) eingesetzt, die in Verbindung mit dem Einsatz der Gegenstromanlage die völlige Beseitigung eines Ölschadens vor Freigabe der Schiffseinheit sicherstellen. Gegen den Austritt von Rohöl in die offene See sichert im Schadensfall der Abschluss des Hafenbeckens durch das Schleusentor oder jede andere Ausführung betriebssicherer Ölsperren zur Absperrung der Hafeneinfahrt, wie z.B. Luftsperren, Schlauchsperren.

Ein Einzel-Seehafen für die Verladung von Rohöl in einem geschlossenen Hafen- bzw. Verladebecken als Merkmal der vorliegenden Erfindung ist im folgenden beschrieben: Bei Wassertiefen bis etwa 30 m erfolgt die Erstellung in Inselbauart. Abgesehen von der Wassertiefe ist die Bauart abhängig von Bodenwerten, der vorgesehenen Lebensdauer sowie von Umweltbedingungen wie Wellenhöhe, Wellenrichtung, Strömung, Tidenhub und Eisgang.

Geeignete Bauarten hierfür sind die Flachgründung in Caisson-Bauart, die Spundwandbauart, die Aufspülung und Kombinationen der genannten Verfahren. Diese Verfahren sind im wesentlichen bereits oben beschrieben.

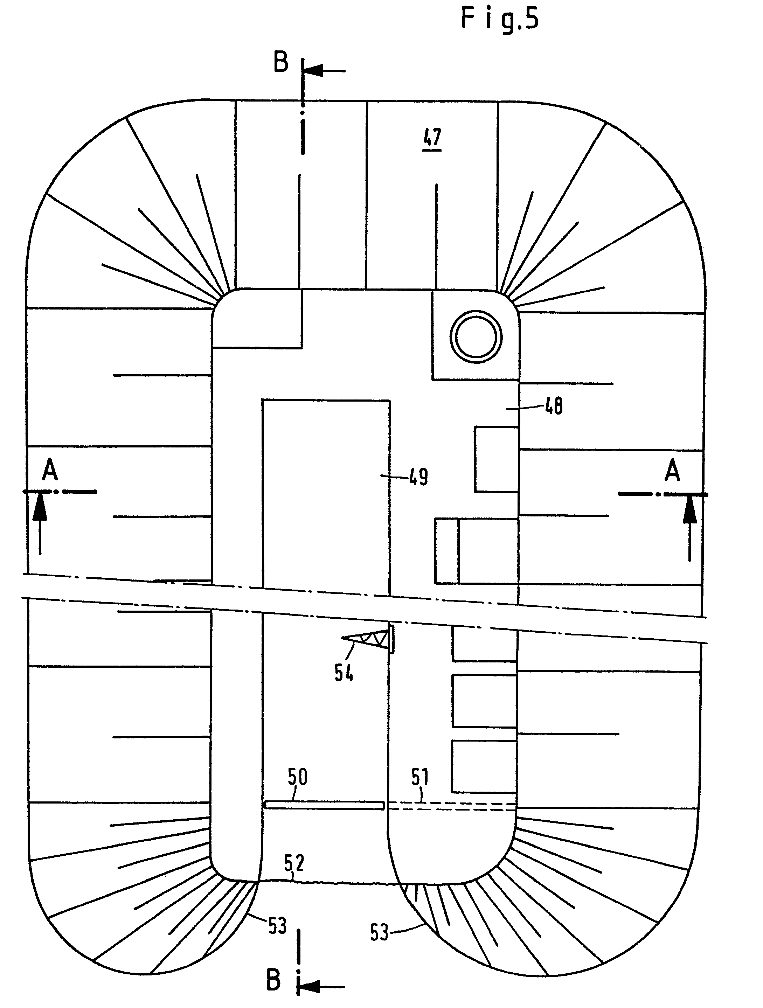

In Fig. 5 ist ein Einzel-Seehafen in Caisson-Bauweise als Bestandteil einer Böschungsinsel mit Begrenzung aus Spundwänden wiedergegeben.

Ein solcher Einzel-Seehafen wird beispielsweise durch die folgenden Bauschritte erstellt. Es werden Spundwände für die Inselbegrenzung eingerammt und durch Steinschüttung (Filteraufbau) kolk-gesichert. Sodann werden Pfähle eingerammt und Betonriegel für die Gründung des Hafenbeckens gesetzt.

Das aus einer oder mehreren Sektionen bestehende Verladebecken wird eingeschwommen und abgesetzt. Zur Sohlensicherung und zur Einfahrtsbegrenzung werden Spundwände gerammt und das Verladebecken mit Spülsand hinterfüllt und die Böschung befestigt. Die Spundwand-Inselbegrenzung wird etwa in der Höhe der Wasserlinie geschnitten und die Arbeitsfläche befestigt. Sodann erfolgt die Montage der Schleuse und Ausrüstung. In Fig. 5 bedeuten 47 die Böschungsneigung, 48 die Arbeitsfläche, 49 das Hafenbecken, 50 das Schleusentor, 51 die Schleusennische, 52 die Spundwand zur Sohlensicherung, 53 die Spundwand zur Einfahrtssicherung und 54 Verladevorrichtungen.

Ein Einzel-Seehafen in konventioneller Stahl/Beton-Ausführung wird beispielsweise wie folgt hergestellt: Es werden Sicherungswände gerammt sowie deren Kolkschutz durch Steinschüttung (Filteraufbau) vorgesehen. Sodann werden Stahl- oder Betonpfähle für die Gründung des Verladebeckens eingerammt und Spundwände zur Sohlensicherung des Hafenbeckens und zur Einfahrtbegrenzung. Innerhalb der Sicherungswände wird der Wasserspiegel bis unter Sohle abgesenkt, die Beckensohle und die Wände in trockener Baugrube bei offener Wasserhaltung betoniert. Sodann wird der Raum zwischen Becken und Sicherungsspundwand mit Spülsand gefüllt. Die Böschung und die Arbeitsfläche werden befestigt und die Schleuse eingebaut. Die Spundwand wird sodann in Höhe der Wasserlinie abgeschnitten und im Bereich der Einfahrt entfernt. Abschliessend werden die Einrichtungen für Ölverladung und zur Bekämpfung von Ölverunreinigungen montiert.

## Patentansprüche

1. Verfahren zur Betreibung von Offshore-Erdölfeldern und zur Verladung bzw. Umschlag von Erdöl im Flachwasser- und Wattenbereich, indem Aufschluss, Förderung, Aufbereitung und Verladung bzw. Umschlag auf stationären, künstlichen Inseln mit durch Sperren verschliessbaren Hafenbecken erfolgt.

2. Verfahren nach Anspruch 1, dadurch gekennzeichnet, dass das Austreten jeglicher Mengen das Wasser des Hafenbeckens verunreinigenden Erdöls dadurch vermieden wird, dass ein Gegenstrom in dem Hafenbecken erzeugt und hierdurch das Oberflächenwasser des Hafenbeckens abgesaugt sowie gereinigt wird, bevor es wieder freigegeben wird.

3. Verfahren nach Anspruch 2, dadurch gekennzeichnet, dass im Verbundverfahren bei der Verladung von Rohöl das abgesaugte, gegebenenfalls gereinigte Wasser für die Sekundärförderung des Rohöls eingesetzt wird.

4. Künstliche Insel zur Durchführung des Verfahrens nach einem der Ansprüche 1 bis 3, dadurch gekennzeichnet, dass sie ein oder mehrere mit Sperren, insbesondere Schleusen (6, 50) verschliessbare Hafenbecken (7, 27, 49) für die Verladung bzw. den Umschlag des Erdöls aufweist, die mit Reinigungsanlagen zur Beseitigung von durch Verladung bzw. Umschlag verursachten Verunreinigungen im Hafenbecken, insbesondere mit Gegenstromanlagen, ausgerüstet sind.

5. Insel nach Anspruch 4, dadurch gekennzeichnet, dass sie im Verbund bohr-, förder-, aufbereitungs-, lagerungs- und/oder verladetechnische Betriebsanlagen (9, 10, 11, 12; 28, 29, 31, 32) aufweist.

6. Insel nach Anspruch 4 oder 5, dadurch gekennzeichnet, dass auf einer Seebaustelle der Wasserspiegel abgesenkt und die Hafenbecken in konventioneller Landbauweise, insbesondere in Spundwandbauweise, erstellt sind.

7. Insel nach Anspruch 4 oder 5, dadurch gekennzeichnet, dass sie vorgefertigte, insbesondere einschwimmbare Hafenbecken (49) aufweist, die im Flachwasserbereich auf dem Meeresboden abgesetzt sind.

8. Insel nach Anspruch 7, dadurch gekennzeichnet, dass die vorgefertigten Hafenbecken (49) im Flachwasserbereich in Rinnen auf dem Meeresboden eingeschwommen, abgesetzt und eingeschlämmt sind.

## Claims

1. A method of operating offshore oil fields and of shipping or transshipping petroleum in shoal waters and tide land areas, wherein exploration, recovery, processing and shipping or transshipping is effected on stationary man-made islands comprising harbour basins adapted to be closed by barriers.

2. A method as claimed in claim 1, characterised in that leakage of any amounts of petroleum, which would contaminate the water in the harbour basin, is prevented by creating a counter-current in the harbour basin, whereby the surface water in the harbour basin is drawn off and cleaned before being released again.

3. A method as claimed in claim 2, characterised in that in a compound method during the shipping of crude oil the drawn-off and optionally cleaned water is used for secondary recovery of crude oil.

4. A man-made island for performing the method as claimed in any of the claims 1 to 3, characterised in that it comprises one or several harbour basins (7, 27, 49) adapted to be closed by barriers, especially by locks (6, 50), for shipment or transshipment of petroleum, said harbour basins being equipped with cleaning systems, especially with counter-current systems, for removing contaminations in the harbour basin caused by shipping or transshipping.

5. An island as claimed in claim 4, characterised in that it comprises in a compound system installations for drilling, recovery, processing, storage and/or shipping (9, 10, 11, 12; 28, 29, 31, 32).

6. An island as claimed in claim 4 or claim 5, characterised in that at a marine construction site the water level is lowered and the harbour basins are set up as conventional land constructions, especially as tongue-and-groove constructions.

7. An island as claimed in claim 4 or claim 5, characterised in that it comprises prefabricated harbour basins (49), especially harbour basins capable of being floated in, which are set on the ocean floor in shoal waters.

8. An island as claimed in claim 7, characterised in that said prefabricated harbour basins (49) are floated-in in shoal waters in channels in the ocean floor, set down and tied in.

## Revendications

1. Procédé d'exploitation de champs pétrolifères marins et de chargement ou de transfert de pétrole dans une zone d'eau peu profonde et de bancs de sable, en réalisant l'exploration, le transport, le traitement et le chargement ou le tansfert sur des îles artificielles stationnaires avec des bassins portuaires obturables par des barrages.

2. Procédé selon la revendication 1, caractérisé en ce que la sortie de chaque quantité de pétrole polluant l'eau du bassin portuaires est évitée en produisant un contre-courant dans le bassin portuaire et ainsi en aspirant et en purifiant l'eau de surface du bassin portuaire avant de la libérer à nouveau.

3. Procédé selon la revendication 2, caractérisé en ce que dans le procédé combiné, lors du chargement d'huile brute, l'eau aspirée éventuellement purifiée est utilisée pour le transport secondaire de l'huile brute.

4. Ile artificielle pour mettre en œuvre le procédé selon l'une des revendications 1 à 3, caractérisée en ce qu'elle présente un ou plusieurs bassins portuaires (7, 27, 49) obturables par des barrages, en particulier des écluses (6, 50), pour le chargement ou le transfert du pétrole et qui sont munis d'installations de purification pour éliminer les impuretés du bassin portuaire provoquées par le chargement ou le transfert, en particulier d'installations à contre-courant.

5. Ile selon la revendication 4, caractérisée en ce qu'elle présente en combinaison des installations de fonctionnement (9, 10, 11, 12; 28, 29, 31, 32) relevant de la technique du forage, du transport, de la préparation, du stockage et/ou du chargement.

6. Ile selon la revendication 4 ou la revendication 5, caractérisée en ce que le niveau d'eau est abaissé à un chantier de construction marin et en ce que les bassins portuaires sont réalisés dans un chantier terrestre classique en particulier en une structure à parois étanches.

7. Ile selon la revendication 4 ou la revendication 5, caractérisée en ce qu'elle présente des bassins portuaires (49) préfabriqués, en particulier flottants, qui sont descendus dans la zone d'eau peu profonde sur le fond de la mer.

8. Ile selon la revendication 7, caractérisée en ce que les bassins portuaires préfabriqués (49) sont plongés, descendus et remblayés dans la zone d'eau peu profonde dans des canaux du fond de la mer.

**F i g.1/1**

**F i g.1/2**

# F i g.2

Fig.3/1

Fig.3/2

0 103 728

Fig.3/3

Fig.4

# Fig.5